# EUROPÄISCHE PATENTSCHRIFT

(11) **EP 3 022 432 B1**
(45) Veröffentlichungstag und Bekanntmachung des Hinweises auf die Patenterteilung: **08.02.2017**
(21) Anmeldenummer: 14720523.1
(22) Anmeldetag: 15.04.2014
(51) Int. Cl.: F02N 11/08

(54) **ELEKTRONISCHE SICHERHEITSABSCHALTUNG FÜR KRAFTFAHRZEUGE**
ELECTRONIC SAFETY INTERRUPTOR FOR MOTOR VEHICLES
COUPE-CIRCUIT ÉLECTRONIQUE DE SÉCURITÉ POUR VÉHICULES À MOTEUR

(30) Priorität: 15.07.2013 DE 102013011719; 13.08.2013 DE 102013013369
(43) Veröffentlichungstag der Anmeldung: 25.05.2016
(73) Patentinhaber: Auto-Kabel Management GmbH, 79688 Hausen i.W. (DE)
(72) Erfinder: BETSCHER, Simon, 41515 Grevenbroich (DE); TAZARINE, Wacim, 41239 Mönchengladbach (DE); KAMPMANN, Robert, Dipl.-Ing, 41236 Mönchengladbach (DE)
(74) Vertreter: Cohausz & Florack
(86) Internationale Anmeldenummer: PCT/EP2014/057592
(87) Internationale Veröffentlichungsnummer: WO 2015/007406

(56) Entgegenhaltungen:
- EP-A1- 1 677 327
- EP-B1- 1 481 163
- DE-A1- 10 210 537
- DE-A1-102010 030 384
- FR-A1- 2 729 901

## Beschreibung

Der Gegenstand betrifft einen elektronischen Schalter in Kraftfahrzeugen umfassend ein Schalternetzwerk. Darüber hinaus betrifft der Gegenstand ein System mit einem elektronischen Schalter und ein Verfahren zum Ansteuern eines solchen elektronischen Schalters.

Verbrennungsmotoren in Kraftfahrzeugen bieten im Stillstand kein Drehmoment. Aus diesem Grunde können solche Verbrennungsmotoren bis zum heutigen Tag nicht selbstständig durch Einspritzen von Kraftstoff gestartet werden. Dies bedingt, dass der Verbrennungsmotor bzw. die Brennkraftmaschine innerhalb des Fahrzeugs mit einem Drehmoment beaufschlagt werden muss, um zu starten. Dieses Drehmoment wird in der Regel durch einen Starter bzw. eine elektrische Maschine zur Verfügung gestellt. Eine solche elektrische Maschine ist zum Starten bzw. Anlassen des Verbrennungsmotors notwendig.

Der Starter des Verbrennungsmotors wird von der Batterie des Kraftfahrzeugs gespeist. Im Moment des Startens, d.h. zum Anlaufen des Starters, ist dessen induktive Last niederohmig und ein sehr hoher Strom fließt von der Batterie über den Starter. Die Induktivität des Starters stellt im Moment des Startens nahezu einen Kurzschluss dar. Der hierdurch bedingte hohe Stromfluss führt zu Einbrüchen der Batteriespannung an den Batteriepolen. Bei einem typischen Startvorgang eines Fahrzeugs bricht die Batteriespannung nach einer kurzen Zeit unter einen Grenzwert ein. In der Folge kann es daher dazu kommen, dass andere Verbraucher im Bordnetz des Fahrzeugs, welche eine Mindestspannung benötigen, nicht mehr mit ausreichend elektrischer Energie versorgt werden können.

Der Spannungseinbruch tritt bei allen Fahrzeugen mit Verbrennungsmotor beim Startvorgang auf, wenn der Verbrennungsmotor mittels eines Starters gestartet wird. Fahrzeuge können beispielsweise Automobile, Schienenfahrzeuge oder Luftfahrzeuge sein. Ferner sind auch Schiffe, Fahrzeuge im Sinne des Gegenstandes.

Um diesen Spannungseinbruch beim Startvorgang, insbesondere im Start-Stopp Betrieb, wie er heute zur Kraftstoffeinsparung üblich geworden ist, zu verhindern, existieren eine Vielzahl von Spannungsstützkonzepten, wie beispielsweise die Verwendung von Stützkondensatoren, die Verwendung von zusätzlichen Batterien als auch der Einsatz von Startstrombegrenzungssystemen.

Ein Startspannungs- bzw. Startstrombegrenzungssystem ist auch bekannt als Startspannungseinbruchsbegrenzer (SEB), Start Current Limiter (SCL), Start-Current Control (SCC), Voltage Drop Limiter (VDL) oder dergleichen. Ein solches Startstrombegrenzungssystem begrenzt den Startspannungseinbruch durch Reduzierung des Stroms, der von der Batterie zum Starter fließt. Es werden dabei weiterhin Spannungseinbrüche bis zu einer definierten Untergrenze in Kauf genommen. Außerdem wird eine Startzeitverzögerung in Kauf genommen, da der Starter im Startvorgang nicht die komplette verfügbare elektrische Energie der Batterie zur Verfügung gestellt bekommt, sondern nur eine begrenzte.

Während des Anlassvorgangs mit einer konventionellen Batterie bricht die Batteriespannung nach wenigen Millisekunden unter 8 Volt ein. Dieser anfängliche Spannungseinbruch wirkt auf alle an die Batterie angeschlossenen elektrischen Verbraucher. Der anfängliche Spannungseinbruch, der nur kurzfristig auftritt, könnte beispielsweise durch vorgeschaltete Pufferkondensatoren kompensiert werden. Bei einem herkömmlichen Anlassvorgang erholt sich die Spannung der Batterie unmittelbar nach dem Starten kurzzeitig auf über 9 Volt, um dann jedoch erneut unter 9 Volt einzubrechen. Dieser zweite Spannungseinbruch kann durch herkömmliche Pufferkondensatoren nicht aufgefangen werden, da deren Kapazität lediglich zur Kompensation des ersten Spannungseinbruchs ausreicht. Die Pufferkondensatoren sind regelmäßig nach dem ersten Spannungseinbruch entladen und der zweite Spannungseinbruch während eines Startvorgangs führt zu Problemen innerhalb des Bordnetzes. Insbesondere Motorsteuergeräte als auch Airbagsteuergeräte sowie sonstige Steuergeräte können kurzfristig ausfallen, da nicht jedes Steuergerät auf ein solch niedriges Spannungsniveau von unter 9 Volt ausgelegt ist.

Startstrombegrenzungssysteme sind in der Regel zwischen der Batterie und dem Starter angeordnet. Herkömmliche Bordnetztopologien beinhalten eine Batterie, einen Starter, einen Generator sowie zumindest ein Verbrauchernetzwerk. Je nach Konzept werden der Starter und der Generator mit jeweils einer getrennten Leitung versorgt oder mit einer kombinierten Starter-Generatorleitung. Um Kurzschlüsse im Fall eines Crashes zu verhindern, wird die Starterleitung oder die Starter-Generatorleitung durch eine sogenannte Sicherheitsbatterieklemme vom Bordnetz irreversibel getrennt.

Um den Spannungseinbruch an der Batterie zu begrenzen, muss zusätzlich zu der Sicherung im Crashfall ein Startstrombegrenzungssystem vorgesehen werden.

Herkömmliche Sicherungen von Batterieleitern sehen irreversible Schalter, insbesondere in Form eines pyrotechnischen Schaltelementes vor. Im Crashfall wird ein Steuerimpuls, vorzugsweise ausgehend von einem Airbagsteuergerät, empfangen und ein pyrotechnischer Schalter löst aus. Dies führt dazu, dass der Batteriepluspol von dem Fahrzeugnetz getrennt wird. Insbesondere werden Starter und Generatorleitungen von dem Batteriepluspol getrennt. Eine Parallelschaltung eines Verbrauchernetzwerkes zu dem Starter und dem Generator kann bei solchen Trennelementen weiterhin mit der Batterie verbunden bleiben, um Sicherheitsfunktionen innerhalb des Fahrzeugs aufrechterhalten zu können. Dennoch ist nach einer solchen Auslösung kein Neustart des Fahrzeugs möglich und ein Abschleppen notwendig. Darüber hinaus muss die Sicherheitskomponente vollständig ausgetauscht werden.

Aus der FR272999001 ist eine Energiemanagementeinheit zwischen einem Wechselstromgenerator, einem Hochleistungsschaltkreis und einem Niederleitungsschaltkreis bekannt. Dieses Schaltnetzwerk ermöglicht aber keinen flexiblen Einsatz in einer Generator-Batterie-Leitung.

Somit lag dem Gegenstand die Aufgabe zugrunde, einen wartungsfreundlichen, flexibel einsetzbaren Schalter für eine Batterieleitung, insbesondere für Generator-Batterie-Leitungen und/oder Starter-Batterie-Leitungen eines Fahrzeugs zur Verfügung zu stellen.

Diese Aufgabe wird durch einen elektronischen Schalter nach Anspruch 1 sowie ein System nach Anspruch 11 als auch ein Verfahren nach Anspruch 21 gelöst.

Es ist erkannt worden, dass durch ein geeignetes Schalternetzwerk eine Absicherung sowohl der Starter-Batterie-Leitung als auch der Generator-Batterie-Leitung erfolgen kann. Jede dieser beiden Leitungen kann parallel zueinander mit einem Batteriepluspol über den gegenständlichen elektronischen Schalter verbunden sein. Hierzu wird der gegenständliche elektronische Schalter eingangsseitig mit dem Pluspol der Batterie im Wesentlichen kurzgeschlossen. Ausgangsseitig des gegenständlichen Schalternetzwerks können zwei Anschlüsse vorgesehen sein. Ein erster Anschluss kann dazu dienen, mit einer Generator-Batterie-Leitung verbindbar zu sein und ein zweiter Ausgang kann dazu ausgelegt sein, mit einer Starter-Batterie-Leitung verbindbar zu sein.

Insbesondere in heutigen Kraftfahrzeugen sind sowohl Generator-Batterie-Leitung als auch Starter-Batterie-Leitung als Flachleitungen, vorzugsweise aus Vollmaterial, oder Rundleitungen, vorzugsweise als Seile oder Litzenleitungen gebildet. Die Leitungen sind vorzugsweise aus Aluminium oder Aluminiumlegierungen, insbesondere mit einer Reinheit von zumindest 99,5% oder Kupfer bzw. Kupferlegierungen, gebildet. Zur Kontaktierung der Leitung an den jeweiligen ersten bzw. zweiten Ausgang sind diese mit geeigneten Anschlussterminals versehen. Bei der Verwendung von Aluminium ist es möglich, dass die Anschlussterminals ausgangsseitig eine Oberfläche aus Aluminium aufweisen, um sortenrein ein Kontakt mit der jeweiligen Generator-Batterie-Leitung bzw. Starter-Batterie-Leitung zu gewährleisten. Auf Seiten des Schalternetzwerks können die Terminals aus Kupfer oder Messing oder sonstigen geeigneten Metallen gebildet sein.

In dem zwischen dem Batteriepol und dem Starter bzw. Generator geschalteten Schalternetzwerk können drei vorzugsweise getrennt voneinander schaltbare Schalterelemente vorgesehen sein. Ein erstes Schaltelement kann elektrisch zwischen den beiden Ausgängen geschaltet sein. Ein zweites Schaltelement ist zwischen dem Eingang und dem ersten Ausgang elektrisch angeordnet und ein drittes Schalterelement ist zwischen dem Eingang und dem zweiten Ausgang elektrisch angeordnet. Somit kann mit dem ersten Schalterelement der erste Ausgang mit dem zweiten Ausgang kurzgeschlossen werden. Mit dem zweiten Schalterelement ist es möglich, den ersten Ausgang und den Eingang kurzzuschließen und mit dem dritten Schalterelement ist es möglich, den Eingang und den zweiten Ausgang miteinander elektrisch kurzzuschließen.

Jedes der Schalterelemente hat einen, wenn auch geringen Übergangswiderstand und stellt einen ohmschen Widerstand in der Verbindung zwischen der Batterie und dem Generator bzw. Starter dar. Um die Verlustleitung im Schalternetzwerk gering zu halten ist es bevorzugt, wenn die Schalterelemente einen Widerstand von weniger als 10 mOhm, vorzugsweise weniger als 1 mOhm, besonders bevorzugt weniger als 0,1 mOhm aufweisen. Ferner sind die Anschlüsse und Leitungen des Schalternetzwerks bevorzugt so ausgestaltet, dass zwischen dem Eingang und jeweils einem Ausgang des Schalternetzwerks ein Widerstand von weniger als 10 mOhm, vorzugsweise weniger als 1 mOhm, besonders bevorzugt weniger als 0,1 mOhm anliegt.

Durch eine geeignete Verschaltung der Schalterelemente ist es möglich, zum einen eine Stromlosschaltung der Batterieleitungen Batterieleitungen (Starter-Batterie- / Generator-Batterie-Leitung) im Crashfall zu gewährleisten. Andererseits kann, unter anderem, da die Schalterelemente Übergangswiderstände aufweisen, eine Startstromeinschaltbegrenzung realisiert werden. Der gegenständliche elektronische Schalter ist somit flexibel einsetzbar und dient zum einen der Sicherung der Starter-Batterie-Leitung bzw. Generator-Batterie-Leitung und andererseits der Startstromeinschaltbegrenzung.

Der elektronische Schalter lässt sich nicht nur in Automobilen wie Pkw und Lkw mit Verbrennungsmotoren, sondern auch in Schienenfahrzeugen, Luftfahrzeugen, Schiffen oder dergleichen, ob nun rein elektrisch betrieben oder mit einem Verbrennungsmotor einsetzen.

Das gegenständliche Schalternetzwerk ist vorzugsweise in der Nähe der elektrischen Batterie, insbesondere der Fahrzeugbatterie, insbesondere der Starterbatterie des Kraftfahrzeugs angeordnet. Es ist in der Regel eine 12, 24 oder 48 Volt Batterie.

Um die elektrische Verlustleistung zwischen dem Schalternetzwerk und dem Batteriepol möglichst gering zu halten, wird vorgeschlagen, dass der Eingang mit einem Batteriepluspol im Wesentlichen kurzschließbar ist. Für den Fall, dass das Schalternetzwerk mit dem Batteriepluspol verbunden ist, ist es möglich, mittels des Schalternetzwerks die Batterieleitungen zum Generator als auch zum Starter stromlos zu schalten. Vorzugsweise ist eine möglichst enge Kopplung des Schalternetzwerks mit dem Batteriepluspol anzustreben, um zu verhindern, dass auf der elektrischen Leitung zwischen dem Schalternetzwerk und dem Batteriepluspol ein Kurzschluss mit der Karosse bzw. dem Batterieminuspol entstehen kann. Kriechströme und Verlustleistung können durch das stromlos Schalten bei Fahrzeugstillstand unterbunden werden. Insbesondere können Verbraucher, die in dem Zweig der Generator-Batterie-Leitung angeordnet sind, ebenfalls stromlos geschaltet werden.

Eine besonders einfache Installation in einem Kraftfahrzeugnetz lässt sich dann realisieren, wenn das Schalternetzwerk bzw. der elektronische Schalter in einem Gehäuse gekapselt ist. In dem Gehäuse sind die verschiedenen Schalterelemente vorgesehen und aus dem Gehäuse ragen vorzugsweise lediglich die beiden Ausgänge als auch der Eingang als elektrische Kontaktelemente heraus. Auch ist es möglich, dass eine Signalleitung in das Gehäuse hinein führt oder dass an dem Gehäuse nach außen ragende Signalanschlüsse vorhanden sind.

Um die verschiedenen Funktionalitäten gewährleisten zu können, ist es möglich, dass einzelne Schalterelemente des Schalternetzwerks getrennt ansteuerbar sind. Vorzugsweise ist jedes einzelne Schalterelement in dem Schalternetzwerk getrennt ansteuerbar. Durch Ansteuern des ersten Schalterelements ist es möglich, die beiden Ausgänge miteinander kurzzuschließen und somit die Generator-Batterie-Leitung unmittelbar mit der Starter-Batterie-Leiter über den ersten Schalter kurzzuschließen.

Über das zweite Schalterelement ist es möglich, den ersten Ausgang mit dem Eingang kurzzuschließen. Dadurch ist es beispielsweise möglich, den Batteriepol mit der Generator-Batterie-Leitung kurzzuschließen. Insbesondere den Batteriepluspol. Das dritte Schalterelement ermöglicht ein Kurzschließen zwischen dem Eingang und dem zweiten Ausgang. Dadurch ist es beispielsweise möglich, den Batteriepol mit der Starter-Batterie-Leitung kurzzuschließen.

Das Öffnen und Schließen der Schalterelemente erfolgt über einen entsprechenden Steuerimpuls von einem Steuergerät. Das Steuergerät ist vorzugsweise außerhalb des elektronischen Schalters, insbesondere auch außerhalb des Gehäuses angeordnet. Auch ist es möglich, dass das Steuergerät Teil des Schalternetzwerks ist. Dabei kann das Steuergerät in dem Gehäuse angeordnet sein. Das Steuergerät kann als Teil eines Schalterelements gebildet sein. Das Steuergerät kann in einem als sogenannten "Master" fungierenden Schalterelement angeordnet sein. Dann können die jeweils anderen Schalterelemente als sogenannte "Slaves" dieses "Masters" fungieren.

Um das Schalten von außerhalb des Gehäuses zu ermöglichen, wird vorgeschlagen, dass eine vorzugsweise mehradrige Steuerleitung zum Schalten der Schalterelemente in das Gehäuse geführt ist. Somit können von außen Steuerimpulse generiert werden, die zum Schalten der Schalterelemente innerhalb des Gehäuses genutzt werden. Dies birgt größtmögliche Flexibilität hinsichtlich der Anordnung des Steuergerätes und ermöglicht eine Miniaturisierung des Gehäuses selbst.

Zum einen platzsparend und zum anderen elektrisch günstig lässt sich das Gehäuse des Schalternetzwerks in einer Polnische einer Fahrzeugbatterie anordnen. Dann ist der Eingang unmittelbar an dem Battierpol, vorzugsweise dem Batteriepluspol. Es ist möglich, dass das Gehäuse als Teil einer Batterieklemme gebildet ist. Andererseits ist die Polnische ohnehin vorhanden und das Anordnen des Gehäuses in der Polnische führt zu einem minimalen Platzverbrauch. Die Fahrzeugtopologie muss dann nicht verändert werden.

Eine Batterie ist regelmäßig mit einer genormten Polnische versehen. Insbesondere die DIN-Normen DIN EN 50342-2 sowie DIN 72311 geben Normmaße für die Polnische sowie einen zwischen den Polnischen verlaufenden Gehäuseversatz der Batterie an. Die Polnische ist dabei der Bereich, der den Batteriepol aufweist und durch Seitenwände der Batterie einerseits und Außenkanten der Batterie andererseits begrenzt ist. Vorzugsweise weist die Polnische ein maximales Maß von 60 mm an 72,5 mm auf. Die Höhe der Polnische ist regelmäßig zwischen 30 und 40 mm, vorzugsweise unterhalb von 35 mm. Innerhalb dieses Bauraums, vorzugsweise unter Verwendung des zwischen den Polnischen verlaufenden länglichen Versatzes kann das Schalternetzwerk angeordnet sein. Es versteht sich, dass die räumliche Anordnung des Schalternetzwerks innerhalb der Polnische so verstanden werden kann, dass hiermit gemeint ist, dass die Baugruppe größtenteils hierin angeordnet sind. Sollte die Baugruppen teilweise außerhalb der Polnische liegen, jedoch weiterhin größtenteils innerhalb der Polnische, so ist dies von der Bedeutung des Begriffs räumlich innerhalb der Polnische umfasst.

Die Schalterelemente können aus Parallelschaltungen von einzelnen Schaltern, die wiederum einzelne Schalter aufweisen und parallel geschaltet sein können, gebildet sein. Auch ist es möglich, dass in den Schalterelementen antiserielle Schalter, beispielsweise in Form von gegenläufig geschalteten Transistoren vorgesehen sind. Somit können die Schalterelemente unidirektional als auch bidirektional Strom schalten. Vorzugsweise können auch Dioden in den Schalterelementen vorgesehen sein, um die Stromflussrichtung beispielsweise in nur eine Richtung zu ermöglichen.

Beispielsweise können solche Dioden zumindestens die jeweiligen intrinsischen Dioden (Bodydioden), welche in den Halbleitern ohnehin vorhanden sind. Zusätzlich kann zur Entlastung der Halbleiter eine Freilaufdiode vorzugsweise als neues, weiteres Bauteil eingesetzt werden.

Gemäß einem Ausführungsbeispiel wird vorgeschlagen, dass ein Schalterelement zumindest einen elektronischen Schalter aufweist. Ein elektronischer Schalter kann beispielsweise als Halbleiterschalter gebildet sein. Dies kann beispielsweise ein Transistorschalter, ein MOSFET-Schalter, ein IGBT-Schalter oder dergleichen sein. Auch elektrische Schalter, wie beispielsweise Schütze oder Relais können vorgesehen sein.

Die Schalterelemente können aus einer Parallelschaltung von jeweils zumindest einer Diode und einem Schalter gebildet sein. Vorzugsweise weisen die zweiten und dritten Schalterelemente jeweils zumindest eine Diode auf, deren Durchgangsrichtung in Richtung der Batterie weist. Das erste Schalterelement kann eine Parallelschaltung von zumindest einer Diode und einem Schalter aufweisen. Die Durchgangsrichtung dieser Diode kann von der Starter-Batterie-Leitung bzw. dem zweiten Ausgang in Richtung der Generator-Batterie-Leitung bzw. dem ersten Ausgang weisen.

Durch diese Diode des ersten Schalters kann verhindert werden, dass während der erste Schalter geöffnet ist, der Strom von der Generator-Batterie-Leitung zur Starter-Batterie-Leitung und/oder zum Starter fließen.

Wie zuvor angedeutet, können die Schalterelemente aus einer Mehrzahl von Schaltern gebildet sein. Daher wird auch vorgeschlagen, dass ein Schalterelement aus einer Parallelschaltung von zumindest zwei getrennt schaltbaren Schaltern gebildet ist. Insbesondere ist eine hohe Stromtragfähigkeit und/oder ein geringer Übergangswiderstand notwendig, um eine Starter-Batterie-Leitung bzw. eine Generator-Batterie-Leitung sinnvoll zu betreiben. Im Fall des Startens einer Verbrennungsmaschine fließt in der Regel von der Batterie ein Strom von mehreren 100 Ampere zum Starter. Halbleiterschalter müssen für solch hohe Ströme ausgelegt sein und die Verlustleitung über diese Schalter sollte möglichst gering sein. Es kann günstiger sein, mehrere Halbleiter parallel zu schalten um den gewünschten Übergangswiderstand durch die Parallelschaltung der einzelnen Halbleiterschalter in Summe zur Verfügung zu stellen. Auch kann durch ein Parallelschalten von mehreren Halbleiterschaltern der Ausfall eines einzelnen Halbleiterschalters gegebenenfalls kompensiert werden. Darüber hinaus kann durch kaskadiertes Schalten von Halbleiterschaltern innerhalb eines Schalterelements der Übergangswiderstand des Schalterelements variiert werden, was insbesondere bei der Startstromeinschaltbegrenzung relevant sein kann. So können beispielsweise zu Beginn nur wenige Halbleiterschalter innerhalb eines Schaltelements geschlossen werden und nach und nach Halbleiterschalter zugeschaltet werden.

Dabei ist es insbesondere möglich, im Moment einer Vorstartphase, also bevor der Starter überhaupt mit Strom beaufschlagt wird, den Pufferkondensator, der regelmäßig an der Generator-Batterie-Leitung angeschlossen ist, zu laden. Hierzu kann z.B. während des Vorstarts das zweite Schalterelement oder das dritte und das erste Schalterelement geschlossen werden, um den Kondensator zu laden. Um einen möglichst gleichmäßigen Ladestrom zu erhalten, kann das zweite Schalterelement oder das dritte und oder das erste Schalterelement auch gepulst geschlossen und geöffnet werden. Somit kann der Ladestrom beeinflusst werden und der Kondensator möglichst schonend geladen werden. Nach dem Vorstart kann durch zunächst Schließen des dritten Schalterelements, ggf. auch gepulst, der Startstrom für den Starter geschaltet werden.

Auch ist es möglich, den Strom zwischen Batterie und Starter gepulst schaltbar zu machen. Durch ein gepulstes Schalten der Schalterelemente kann ein mittlerer Widerstandswert eingestellt werden, was auch für die Stromeinschaltbegrenzung relevant ist.

Auch wird ein System mit einem zuvor beschriebenen elektronischen Schalter vorgeschlagen. Das System wird vorzugsweise in einem Kraftfahrzeug, insbesondere mit einem Verbrennungsmotor eingesetzt. Das System setzt sich aus einer Batterieleitung, welche mit einem Batteriepol verbunden ist und einer Generator-Batterie-Leitung als auch eine Starter-Batterie-Leitung zusammen. Der Batteriepol ist über die Batterieleitung mit dem Eingang des elektronischen Schalters verbunden. Der erste Ausgang ist mit der Generator-Batterie-Leitung verbunden und der zweite Ausgang mit der Starter-Batterie-Leitung. Das System stellt somit eine zwischen Batterie und Starter bzw. Generator angeordnete Schaltfunktionalität zur Verfügung.

Bei dem gegenständlichen System ist das Schalternetzwerk vorzugsweise in räumlicher Nähe zu der Batterie angeordnet, insbesondere in einem Abstand von weniger als 50 cm. Für eine besonders geringe Verlustleistung auf der Batterieleitung wird eine Leitungslänge zwischen einem Batteriepol und dem Eingang von weniger als 50 cm vorgeschlagen. Außerdem ist die Kurzschlussanfälligkeit für die Leitungsstrecke zwischen Batteriepol und Eingang möglichst gering zu halten, was unter anderem auch durch eine geringe Leitungslänge realisierbar ist.

Eine bevorzugte Position der Anordnung des Schalternetzwerkes ist eine Batteriewanne. Darin kann das Schalternetzwerk in unmittelbarer Nähe zu der Batterie angeordnet werden.

In dem gegenständlichen System kann eine Steuerschaltung vorgesehen sein, wie sie zuvor beschrieben wurde. Diese ist dazu eingerichtet, die einzelnen Schalterelemente abhängig von Fahrzeugzuständen zu schalten. So kann eine Stromlosschaltung der Starter-Batterie-Leitung und/oder der Generator-Batterie-Leitung erfolgen. So können beispielsweise Kriechstromkorrosion verringert bzw. vermieden werden, in dem bei Stillstand des Fahrzeugs diese Leitungen von dem Batteriepluspol getrennt werden.

Hierzu ist es beispielsweise möglich, dass bei Fahrzeugstillstand zumindest der zweite Schalter, vorzugsweise der zweite Schalter und der dritte Schalter geöffnet werden.

Beim Start, insbesondere beim Warmstart im Start-Stop-Betrieb, ist es häufig notwendig, einen Spannungseinbruch unter 9 Volt zu verhindern. Um dies zu erreichen, muss der Strom von der Batterie zum Starter gesteuert werden. In den ersten einhundert Millisekunden, vorzugsweise in der ersten Sekunde, insbesondere innerhalb der ersten zwei Sekunden des Starts fließt ein sehr hoher Strom von der Batterie zum Starter. Um diesen zu verringern, wird vorgeschlagen, zumindest nur das dritte Schalterelement zu Beginn des Startvorgangs zu schließen. Auch ist es möglich, dass das zweite und das dritte Schalterelement zu Beginn des Starts geschlossen werden. Erst nach Ablauf einer gewissen Startzeit kann das erste Schalterelement hinzugeschaltet werden. Auch ist es möglich, dass das erste, zweite und dritte Schalterelement zu Beginn des Starts geschlossen werden.

Das Öffnen und Schließen der Schalterelemente kann auch abhängig von einem Ladezustand der Batterie (SOC) oder einem Status der Batterie (State-Of-Health) der Batterie erfolgen. So kann z.B. bei einer geringen Batteriespannung, i.e. einem schlechten SOC, ein Spannungseinbruch durch gepulstes Schalten des dritten Schalterelements berücksichtigt werden. Auch kann das erste Schalterelement ggf. erst später oder auch gepulst eingeschaltet werden, um die Batterie möglichst schonend zu belasten.

Auch der Zustand der Schalterelemente kann durch die Steuerschaltung überwacht werden. Bei Ausfall eines Schalters, insbesondere des zweiten oder dritten Schalters kann durch Schließen des jeweils anderen Schalters und des ersten Schalters der ausgefallene Schalter überbrückt werden und so eine Fehlfunktion verhindert werden.

In der Generator-Batterie-Leitung bzw. in dem Strang, der die Generator-Batterie-Leitung mit dem Schalternetzwerk verbindet, kann ein erster Teil elektrischer Verbraucher des Kraftfahrzeugs angeordnet sein.

Ein zweiter Teil elektrischer Verbraucher kann unmittelbar an dem Batteriepluspol angeschlossen sein, ohne über das Schalternetzwerk abgesichert zu sein. Diese Verbraucher können beispielsweise Verbraucher sein, die sicherheitskritisch sind und bei denen ein Abschalten zwingend vermieden werden muss.

Ein weiterer Gegenstand ist ein Verfahren nach Anspruch 21 sowie ein Verfahren nach Anspruch 22. Das Schalten der Schalterelemente abhängig von den Fahrzeugzuständen ermöglicht eine adaptive Steuerung des Widerstands zwischen Batterie und Starter bzw. Batterie und Generator und somit einen Einfluss auf den Strom in der Generator-Batterie-Leitung als auch auf der Starter-Batterie-Leitung.

Nachfolgend wird der Gegenstand anhand einer Ausführungsbeispiele zeigenden Zeichnung näher erläutert. In der Zeichnung zeigen:
- Fig. 1: eine allgemeine Bordnetztopologie mit einem Schalternetzwerk;
- Fig. 2: eine detaillierte Bordnetztopologie mit einem Schalternetzwerk;
- Fig. 3: eine Bordnetztopologie mit teilweise unidirektionalen Schalterelementen.

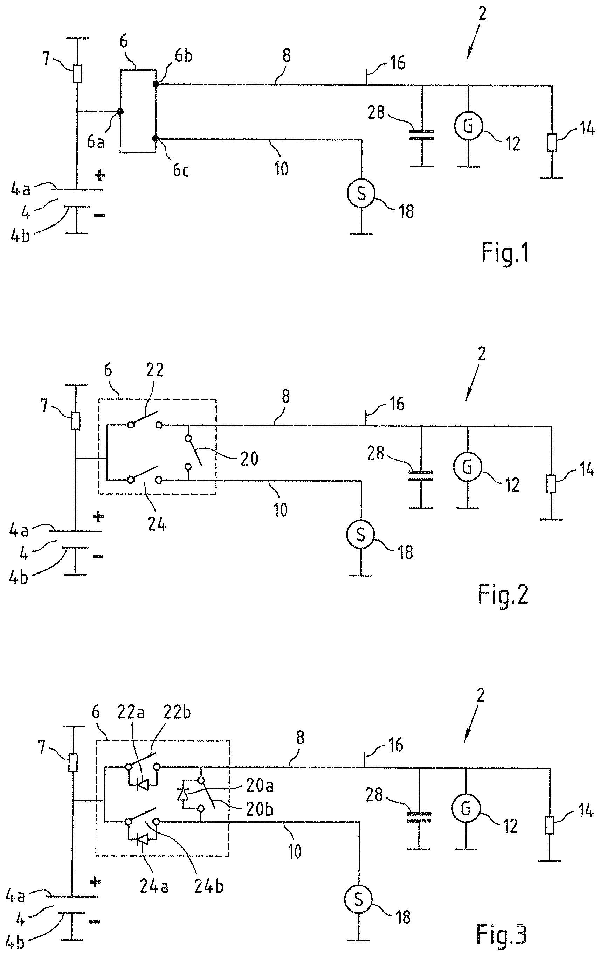

Fig. 1 zeigt eine Bordnetztopologie 2 eines Kraftfahrzeugs. Die Bordnetztopologie weist eine Kraftfahrzeugbatterie 4 mit einem Pluspol 4a und einem Minuspol 4 b auf. Der Minuspol 4b ist regelmäßig mit der Karosse des Kraftfahrzeugs verbunden. Am Pluspol 4a der Batterie 4 ist in unmittelbarer räumlicher als auch elektrischer Nähe ein elektronischer Schalter 6 angeordnet. Der elektronische Schalter ermöglicht eine flexible Beschaltung von daran angeschlossenen Batterieleitungen, wie z.B. eine Starter-Batterie-Leitung 10 und/oder eine Generator-Batterie-Leitung 8 und insbesondere eine Startstromeinschaltbegrenzung als auch eine Stromlosschaltung bei einem Unfall bzw. einem Stillstand.

Parallel zu dem elektronischen Schalter 6 ist es möglich, ein Verbrauchernetz, schematisch mit einem Widerstand 7 angedeutet, mit dem Batteriepluspol 4a zu verbinden. Dieses Verbrauchernetz 7 umfasst insbesondere sicherheitskritische Verbraucher, die keinesfalls von der Batterie zu trennen sind.

Der elektronische Schalter 6 weist einen Eingang 6a sowie einen ersten Ausgang 6b und einen zweiten Ausgang 6c auf.

Der Eingang 6a ist mit dem Batteriepluspol 4a kurzgeschlossen. Der erste Ausgang 6b ist mit einer Generator-Batterie-Leitung 8 verbunden. Der zweite Ausgang 6c ist mit einer Starter-Batterie-Leitung 10 verbunden. Beide Leitungen 8, 10 können als Flachleitungen und oder Rundleitungen, insbesondere als massive Aluminiumleitungen und oder Kupferleitungen geformt sein. Die Generator-Batterie-Leitung ist unmittelbar mit dem Generator 12 verbunden. Außerdem kann dem Strang der Generator-Batterie-Leitung 8 ein weiteres Verbrauchernetzwerk 14 vorgesehen sein. Diese Verbraucher können beispielsweise Komfortverbraucher sein, die im Crashfall als auch beim Stillstand des Fahrzeugs nicht zwingend mit elektrischer Leistung von der Batterie 4 versorgt werden müssen. Ferner kann ein Fremdstartstützpunkt 16 an der Generator-Batterie-Leitung 8 vorgesehen sein.

Parallel zu der Generator-Batterie-Leitung 8 ist die Starter-Batterie-Leitung 10 vorgesehen, die mit dem Starter 18 verbunden ist. Die Masserückführung zum Batterieminuspol 4b erfolgt im gezeigten Fall über die Karosse, kann jedoch auch über eine getrennte Masseleitung erfolgen. Insbesondere in Hochvoltnetzen erfolgt die Masserückleitung über eine separate Leitung.

Der erfindungsgemäße Schalter 6 zeichnet sich durch ein Schalternetzwerk aus, wie es in der Fig. 2 dargestellt ist. Der Schalter 6 kann in einem gestrichelt angedeuteten Gehäuse gekapselt sein. Das Schalternetzwerk des Schalters 6 setzt sich aus einem ersten Schalterelement 20, einem zweiten Schalterelement 22 und einem dritten Schalterelement 24 zusammen.

Die Schalterelemente 20-24 können als elektrische Schalter, beispielsweise als Relais oder Schütze als auch als Halbleiterschalter gebildet sein. Insbesondere können die Schalterelemente 20-24 aus Parallelschaltungen von Halbleiterschaltern gebildet sein.

Eine nicht dargestellte Steuerschaltung ist vorgesehen, um die Schaltzustände der Schalterelemente 20-24 zu beeinflussen, insbesondere zu öffnen und zu schließen und vorzugsweise mit einem im Fahrzeug vorhandenen Steuergerät zu kommunizieren.

Im Stillstand eines Fahrzeugs können die Schalterelemente 22 und 24 geöffnet sein. Dies bedeutet, dass der Batteriepluspol 4a elektrisch von den beiden Leitungen 8, 10 getrennt ist. Die beiden Leitungen 8,10 sind spannungsfrei und Korrosion durch Kriechstromkorrosion wird auf diesen Leitungen 8, 10 und insbesondere den jeweiligen Kontaktstellen vermieden.

Wenn das Fahrzeug gestartet werden soll, kann der Schalter 24 geschlossen werden und der Starter 18 wird von der Batterie 4 mit elektrischer Leistung versorgt. Das Schalterelement 22 kann dabei ebenfalls geschlossen werden.

Es ist möglich, den Widerstand des Schalters 6 zu variieren, indem beispielsweise zunächst lediglich der Schalter 24 geschlossen wird. Über diesen Schalter 24 fließt der erste Startstrom zu dem Starter 18. Nach einer gewissen Startzeit, beispielsweise einige Millisekunden, werden auch die Schalter 22 und/oder 20 geschlossen und der Gesamtwiderstand zwischen der Batterie 4 und dem Starter 8 über den Schalter 6 wird somit verringert. Es fließt ein höherer Strom zum Starter 18. Durch ein gepulstes Schalten der Schalterelemente 20-24 im Falle des Startens ist es möglich, den Widerstand zu variieren und somit den Starteinschaltstrom von der Batterie 4 zum Starter 18 zu begrenzen.

Die nicht dargestellte Steuerschaltung überwacht auch die Zustände der Schalterelemente 20-24. Fällt beispielsweise das Schalterelement 22 aus, so ist eine Überbrückung des Schalterelements 22 durch Schließen der Schalterelemente 20, 24 möglich. Andererseits ist es auch möglich, dass ein Ausfall des Schalterelements 24 durch Schließen der Schalterelemente 20, 22 überbrückt werden kann.

In der Fig. 3 ist elektronischer Schalter 6 in einer Bordnetztopologie 2 gezeigt, die derjenigen nach Fig. 1 und Fig. 2 entspricht. Zusätzlich zu den in Fig. 2 gezeigten Schalterelementen 20, 22 und 24, die allesamt z.B. aus einer jeweiligen Parallelschaltung von Halbleiterschaltern gebildet sind, sind parallel geschaltete unidirektionale Komponenten, z.B. Dioden 20a, 22a, 24a oder dergleichen vorgesehen. Zu erkennen ist, dass die Diode 20a derart angeordnet ist, dass deren Durchflussrichtung von dem ersten Ausgang zu dem zweiten Ausgang weist. Die Diode 22a ist derart angeordnet, dass deren Durchflussrichtung von dem ersten Ausgang zu dem Eingang weist. Die Diode 24a ist derart angeordnet, dass deren Durchflussrichtung von dem zweiten Ausgang zu dem Eingang weist.

Durch die Dioden 22a und 24a wird die Batterie vor einem ungewollten entladen geschützt.

Die Anordnung der Diode 20b ermöglicht es, dass der Strom im geöffneten Zustand des Schalters 20b vom Ausgang des Schalters 22b in Richtung Starterleitung 10 fließen kann. Wäre die Diode 20b in umgekehrter Richtung, würde im geöffneten Zustand des Schalters 20b, der große Spannungseinbruch, der aus dem hohen Strom für den Starter (Starterpeak) resultiert, über die Diode 20a (umgekehrte Richtung) auf die Generatorleitung 8 einprägen.

Der gezeigte elektronische Schalter 6 bietet eine enorme Flexibilität hinsichtlich der Kurzschlusssicherheit als auch der Starteinschaltbegrenzung. Der elektronische Schalter 6 lässt sich in einem Gehäuse kapseln und beispielsweise in einer nicht dargestellten Polnische oder in einer Batteriewanne oder einem Vorstromverteiler insbesondere im Motorraum anordnen.

## Patentansprüche

1. Bordnetz für Kraftfahrzeugen mit
einem elektronischer Schalter (6) umfassend:
- ein Schalternetzwerk mit
- einem Eingang (6a), einem ersten Ausgang (6b) und einen zweiten Ausgang (6c) und
- einem zwischen dem ersten Ausgang (6a) und dem zweiten Ausgang (6c) angeordneten ersten Schalterelement (20),
- einem zwischen dem Eingang (6a) und dem ersten Ausgang (6b) angeordneten zweiten Schalterelement (22) und
einem zwischen dem Eingang (6a) und dem zweiten Ausgang (6c) angeordneten dritten Schalterelement (24), wobei
- der Eingang (6a) mit einem Batteriepol (4a) elektrisch verbindbar ist,
- der erste Ausgang (6b) mit einer Generator-Batterie Leitung (8) verbindbar ist und
- der zweite Ausgang (6c) mit einer Starter-Batterie Leitung (10) verbindbar ist **dadurch gekennzeichnet,**
- **dass** eine mit einem Batteriepol (4a) verbundene Batterieleitung mit dem Eingang (6a) verbunden ist,
- **dass** der erste Ausgang (6b) mit einer Generator-Batterie Leitung (8) verbunden ist und
- **dass** der zweite Ausgang (6c) mit einer Starter-Batterie Leitung (10) verbunden ist.

2. Bordnetz nach Anspruch 1, **dadurch gekennzeichnet, dass** der Eingang (6a) mit einem Batterie Pluspol (4a) im Wesentlichen kurzgeschlossen ist.

3. Bordnetz nach Anspruch 1 oder 2, **dadurch gekennzeichnet, dass** ein Widerstand zwischen dem Eingang (6a) und zumindest einem der Ausgänge (6b, 6c) weniger als 10 mOhm, bevorzugt weniger als 1 mOhm, insbesondere weniger als 0,1 mOhm beträgt.

4. Bordnetz nach einem der vorangehenden Ansprüche, **dadurch gekennzeichnet, dass** die Schalterelemente (20, 22, 24) in dem Schalternetzwerk jeweils getrennt ansteuerbar sind.

5. Bordnetz nach einem der vorangehenden Ansprüche, **dadurch gekennzeichnet, dass** das Schalternetzwerk in einem Gehäuse gekapselt ist und/oder, dass eine mehradrige Steuerleitung zum Schalten der Schalterelemente in das Gehäuse geführt ist und/oder, dass das Gehäuse an eine Polnische einer Fahrzeugbatterie angepasst ist.

6. Bordnetz nach einem der vorangehenden Ansprüche, **dadurch gekennzeichnet, dass** ein Schalterelement (20, 22, 24) zumindest einen elektronischen Schalter, insbesondere einen Halbleiterschalter, einen Transistorschalter, einem MOSFET Schalter, einen IGBT Schalter oder einen elektrischen Schalter, insbesondere ein Relais, oder einen antiseriellen Schalter aufweist.

7. Bordnetz nach einem der vorangehenden Ansprüche, **dadurch gekennzeichnet, dass** ein Schalterelement (20, 22, 24) aus einer Parallelschaltung von zumindest zwei getrennt schaltbaren Schaltern gebildet ist.

8. Bordnetz nach einem der vorangehenden Ansprüche, **dadurch gekennzeichnet, dass** ein Schalterelement (20, 22, 24) gepulst schaltbar ist.

9. Bordnetz nach Anspruch 1, **dadurch gekennzeichnet, dass** das Schalternetzwerk in räumlicher Nähe zu einer Batterie (4) angeordnet ist, insbesondere in einem Abstand von weniger als 50 cm, insbesondere dass eine Leitungslänge zwischen einem Batteriepol und dem Eingang weniger als 50 cm beträgt.

10. Bordnetz nach einem der vorangehenden Ansprüche, **dadurch gekennzeichnet, dass** das Schalternetzwerk in einer Batteriewanne oder einem Vorstromverteiler angeordnet ist.

11. Bordnetz nach einem der vorangehenden Ansprüche, **dadurch gekennzeichnet, dass** das Schalternetzwerk in einer Polnische der Batterie (4) angeordnet ist.

12. Bordnetz nach einem der vorangehenden Ansprüche, **dadurch gekennzeichnet, dass** eine Steuerschaltung mit den Schalterelementen (20, 22, 24) verbunden ist und die Steuerschaltung abhängig von Fahrzeugzuständen die Schalterelemente (20, 22, 24) schaltet und/oder, dass die Steuerschaltung derart eingerichtet ist, dass sie bei Fahrzeugstillstand zumindest den zweiten Schalter (22), vorzugsweise den zweiten Schalter (22) und den dritten Schalter (24) öffnet und/oder, dass die Steuerschaltung derart eingerichtet ist, dass sie bei einem Warmstart eines Verbrennungsmotors des Fahrzeugs für eine Startdauer von weniger als 2 Sekunden zunächst nur der zweite Schalter (22) und der dritten Schalter (24) schließt und nach Ablauf der Startdauer zusätzlich den ersten Schalter (20) schließ, und/oder, dass die Steuerschaltung derart eingerichtet ist, dass sie den Zustand der Schaltelemente (20, 22, 24) überwacht und bei einem Fehlerzustand eines Schaltelements (20, 22, 24) durch Schalten jeweils zumindest eines anderen Schaltelements (20, 22, 24) das fehlerhafte Schaltelement (20, 22, 24) elektrisch überbrückt.

13. Bordnetz nach einem der vorangehenden Ansprüche, **dadurch gekennzeichnet, dass** die Generator-Batterie Leitung (8) mit einem ersten Teil elektrischer Verbraucher verbunden ist und/oder, dass die Batterie (4) parallel zu dem Schalternetzwerk mit einem zweiten Teil elektrischer Verbraucher verbunden ist.

14. Verfahren zum Ansteuern eines Bordnetzes nach einem der Ansprüche 1 bis 13 bei dem
- bei einem Fahrzeugstillstand zumindest der zweite und/oder der dritte Schalter (22, 24) geöffnet werden und/oder
- bei einem Warmstart eines Verbrennungsmotors des Fahrzeugs für eine Startdauer von vorzugsweise weniger als 2 Sekunden zunächst nur der zweite (22) Schalter und der dritten Schalter (24) geschlossen wird und nach Ablauf der Startdauer zusätzlich der ersten Schalter (20) geschlossen wird.

15. Verfahren nach Anspruch 14, **dadurch gekennzeichnet, dass** bei einer Fehlfunktion des zweiten Schalters (22) der Eingang (6a) mit dem ersten Ausgang (6b) durch Schließen des ersten Schalters (20) und des dritten Schalters (24) verbunden wird und dass bei einer Fehlfunktion des dritten Schalters (24) der Eingang (6a) mit dem zweiten Ausgang (6c) durch Schließen des ersten Schalters (20) und des zweiten Schalters (22) verbunden wird.

## Claims

1. Onboard network for motor vehicles, with an electronic switch (6) comprising:
- a switch network having
- an input (6a), a first output (6b) and a second output (6c) and
- a first switch element (20) arranged between the first output (6a) and the second output (6c),
- a second switch element (22) arranged between the input (6a) and the first output (6b) and
a third switch element (24) arranged between the input (6a) and the second output (6c), wherein
- the input (6a) is electrically connectable to a battery pole (4a),
- the first output (6b) is connectable to a generator-battery line (8), and
- the second output (6c) is connectable to a starter-battery line (10), **characterised in**
- **that** a battery cable connected to a battery pole (4a) is connected to the input (4a)
- **that** the first output (6b) is connected to a generator-battery line (8) and
- **that** the second output (6c) is connected to a starter-battery line (10).

2. Onboard network according to Claim 1,
**characterised in that**
the input (6a) is substantially short-circuited to a positive battery pole (4a).

3. Onboard network according to Claim 1 or 2, **characterised in that**
a resistance between the input (6a) and at least one of the outputs (6b, 6c) is less than 10 mOhm, preferably less than 1 mOhm, in particular less than 0.1 mOhm.

4. Onboard network according to any one of the preceding claims,
**characterised in that** the switch elements (20, 22, 24) in the switch network can each be actuated separately.

5. Onboard network according to any one of the preceding claims,
**characterised in that** the switch network is encapsulated in a housing, and/or that a multi-core control line is routed into the housing to switch the switch elements, and/or that the housing fits a pole recess of a vehicle battery.

6. Onboard network according to any one of the preceding claims,
**characterised in that** a switch element (20, 22, 24) has at least one electronic switch, in particular a semiconductor switch, a transistor switch, a MOSFET switch, an IGBT switch or an electrical switch, in particular a relay, or an anti-serial switch.

7. Onboard network according to any one of the preceding claims,
**characterised in that** a switch element (20, 22, 24) is formed from a parallel circuit of at least two switches that can be switched separately.

8. Onboard network according to any one of the preceding claims,
**characterised in that** a switch element (20, 22, 24) can be switched in a pulsed manner.

9. Onboard network according to Claim 1, **characterised in that** the switch network is arranged in the spatial vicinity of a battery (4), in particular at a distance of less than 50 cm, in particular that a line length between a battery pole and the input is less than 50 cm.

10. Onboard network according to any one of the preceding claims,
**characterised in that** the switch network is arranged in a battery tray or current distributor.

11. Onboard network according to any one of the preceding claims,
**characterised in that** the switch network is arranged in a pole recess of the battery (4).

12. Onboard network according to any one of the preceding claims,
**characterised in that** a control circuit is connected to the switch elements (20, 22, 24) and the control circuit switches the switch elements (20, 22, 24) depending on vehicle states, and/or that the control circuit is arranged such that it opens at least the second switch (22), preferably the second switch (22) and the third switch (24) when the vehicle is at a standstill, and/or that during a warm start of an internal combustion engine of the vehicle, the control circuit initially closes only the second switch (22) and the third switch (24) for a starting period of less than 2 seconds and additionally closes the first switch (20) after the starting period has elapsed, and/or that the control circuit monitors the state of the switch elements (20, 22, 24), and if a switch element (20, 22, 24) is in a fault state electrically bypasses the defective switch element (20, 22, 24) by switching at least one other switch element (20, 22, 24).

13. Onboard network according to any one of the preceding claims,
**characterised in that** the generator-battery line (8) is connected to a first portion of electrical consumers, and/or that the battery (4) is connected to a second portion of electrical consumers parallel to the switch network.

14. Method for actuating an onboard network according to one of Claims 1 or 13, in which
- at least the second and/or the third switch (22, 24) is/are opened when the vehicle is at a standstill, and/or
- during a warm start of an internal combustion engine of the vehicle, only the second switch (22) and the third switch (24) are initially closed for a starting period of preferably less than 2 seconds and the first switch (20) is additionally closed after the starting period has elapsed.

15. The method according to Claim 14, **characterised in that** if the second switch (22) malfunctions, the input (6a) is connected to the first output (6b) by closing the first switch (20) and the third switch (24), and if the third switch (24) malfunctions, the input (6a) is connected to the second output (6c) by closing the first switch (20) and the second switch (22).

## Revendications

1. Réseau de bord pour véhicules automobiles, avec un commutateur électronique (6) qui comprend :
- un réseau de commutateurs avec
- une entrée (6a), une première sortie (6b) et une deuxième sortie (6c), et
- un premier élément de commutation (20), qui est disposé entre la première sortie (6b) et la deuxième sortie (6c), et
- un deuxième élément de commutation (22), qui est disposé entre l'entrée (6a) et première sortie (6b), et
- un troisième élément de commutation (24), qui est disposé entre l'entrée (6a) et la deuxième sortie (6c), sachant que
- l'entrée (6a) peut être reliée électriquement à un pôle de batterie (4a),
- la première sortie (6b) peut être reliée à la conduite batterie - générateur (8) et
- la deuxième sortie (6c) peut être reliée à la conduite batterie - démarreur (10)
**caractérisé en ce que** la conduite de la batterie, reliée au pôle de batterie (4a), est reliée à l'entrée (6a),
- la première sortie (6b) est reliée à une conduite batterie - générateur (8), et
- la deuxième sortie (6c) est reliée à une conduite batterie - démarreur (10).

2. Réseau de bord selon la revendication 1,
**caractérisé en ce que** l'entrée (6a) est essentiellement court-circuitée avec un pôle de batterie (4a) positif.

3. Réseau de bord selon revendication 1 ou 2,
**caractérisé en ce qu'**une résistance, disposée entre l'entrée (6a) et au moins l'une des sorties (6b, 6c), est inférieure à 10 mOhm, de préférence inférieure à 1 mOhm, en particulier inférieure à 0,1 mOhm.

4. Réseau de bord selon l'une des revendications précédentes,
**caractérisé en ce que** les éléments de commutation (20, 22, 24) peuvent être commandés séparément dans le réseau de commutation.

5. Réseau de bord selon l'une des revendications précédentes,
**caractérisé en ce que** le réseau de commutation est capsulé dans un boîtier et / ou qu'une conduite électrique à plusieurs fils est introduite dans le boîtier et / ou que le boîtier est adapté à la niche de pôle d'une batterie de véhicule automobile.

6. Réseau de bord selon l'une des revendications précédentes,
**caractérisé en ce que** les éléments de commutation (20, 22, 24) sont au moins dotés d'un commutateur électronique, en particulier d'un commutateur à semi-conducteur, d'un commutateur à transistor, d'un commutateur IGBT ou d'un commutateur électrique, en particulier d'un relais ou d'un commutateur anti sériel.

7. Réseau de bord selon l'une des revendications précédentes,
**caractérisé en ce que** les éléments de commutation (20, 22, 24)) sont formés à partir d'un montage en parallèle d'au moins deux commutateurs commutables séparément.

8. Réseau de bord selon l'une des revendications précédentes**,**
**caractérisé en ce que** l'un des éléments de commutation (20, 22, 24)) peut être commuté de manière pulsée.

9. Réseau de bord selon la revendication 1,
**caractérisé en ce que** le réseau de commutation est disposé à proximité d'une batterie (4), en particulier à une distance de moins de 50 cm, en particulier qu'une longueur de conduite entre le pôle de la batterie et l'entrée est inférieure à 50 cm.

10. Réseau de bord selon l'une des revendications précédentes,
**caractérisé en ce que** le réseau de commutation est disposé dans une cuvette de batterie ou associé à un distributeur de courant de polarisation.

11. Réseau de bord selon l'une des revendications précédentes,
**caractérisé en ce que** le réseau de commutation est disposé dans une niche de pôle de la batterie (4).

12. Réseau de bord selon la revendication précédente,
**caractérisé en ce** q qu'un circuit de commande est relié aux éléments de commutation (20, 22, 24)) et que le circuit de commande commute les éléments de commutation (20, 22, 24)) en fonction de l'état de fonctionnement du véhicule automobile et / ou que le circuit de commande est aménagé de telle manière qu'il ouvre au moins le deuxième commutateur (22), de préférence le deuxième commutateur (22) et le troisième commutateur (24), quand le véhicule automobile est à l'arrêt, et / ou que le circuit de commande est aménagé de telle manière que, lors d'un démarrage à chaud d'un moteur à combustion interne, il ne ferme d'abord que le deuxième commutateur (22) et le troisième commutateur (24) pour une durée de démarrage de moins de 2 secondes, et ferme en plus le premier commutateur (20) après l'écoulement du temps de démarrage, et / ou que le circuit de commande est aménagé de telle manière qu'il surveille l'état des éléments de commutation (20, 22, 24)) et que, lors d'un état défectueux de l'un des éléments de commutation (20, 22, 24)), il ponte électriquement l'élément de commutation défectueux (20, 22, 24)) par commutation d'au moins l'un des autres éléments de commutation (20, 22, 24)).

13. Réseau de bord selon l'une des revendications précédentes,
**caractérisé en ce que** la conduite batterie - générateur (8) est reliée à une première partie de consommateurs électriques et / ou que la batterie (4) est reliée à une deuxième partie de consommateurs, en parallèle par rapport au réseau de commutation.

14. Procédé de commande d'un réseau de bord selon l'une des revendications 1 à 13, dans lequel
- lors d'un arrêt du véhicule automobile, au moins le deuxième et / ou le troisième commutateur (22, 24) sont ouverts et / ou
- lors d'un démarrage à chaud d'un moteur à combustion interne du véhicule automobile, seuls le deuxième commutateur (22) et le troisième commutateur (24) sont d'abord fermés pour une durée de démarrage de préférence de moins de 2 secondes, et le premier commutateur (20) est fermé en plus après l'écoulement du temps de démarrage.

15. Procédé selon la revendication 14,
**caractérisé en ce que,** lors d'un disfonctionnement du deuxième commutateur (22), l'entrée (6a) est reliée à la première sortie (6b) par fermeture du premier commutateur (20) et du troisième commutateur (24) et q u e, lors d'un disfonctionnement du troisième commutateur (24), l'entrée (6a) est reliée à la deuxième sortie (6c) par fermeture du premier commutateur (20) et du deuxième commutateur (22).
